# EUROPEAN PATENT APPLICATION

(11) **EP 0 684 117 A1**
(43) Date of publication of application: **29.11.1995**
(21) Application number: 94108047.5
(22) Date of filing: 25.05.1994
(51) Int. Cl.: B29B 17/02, B30B 9/04, B03B 9/06, C10L 5/46

(54) **Machine for processing moisture-containing material, particularly for recycling municipal solid waste**

(71) Applicant: TECNOECO S.r.l., I-15076 Ovada, Alessandria (IT)
(72) Inventor: Vezzani, Roberto, I-15076 Ovada (Alessandria) (IT)
(74) Representative: Modiano, Guido, Dr.-Ing.

(57) **Abstract**

The present invention relates to a machine for processing moisture-containing material, particularly for recycling municipal solid waste, which comprises a fixed frame (2) that rotatably supports, about a rotation axis, a movable frame (4) on which there are at least two cylinders (7) in which the ends are open and the skirt is crossed by multiple holes. These cylinders (7) are mutually angularly spaced around the rotation axis and are arrangeable in sequence, by means of the rotation of the movable frame (4) about the rotation axis, at working stations (9, 10, 11) arranged around the rotation axis and mutually angularly spaced. The working stations comprise: at least one loading station (9), provided with means (19) for closing one of the two ends of the cylinder (7) located at the loading station (9) and means (12) for loading the material to be processed inside the cylinder (7) through the other end; a compression station (10), which has means for hermetically closing at least one of the ends of the cylinder (7) located at the compression station (10) and has a moving element (22) insertable in the cylinder from the other end to compress the material inserted therein, extruding the moisture content of the material through the holes of the cylinder; and a discharge station (11) provided with means (39) for extracting the compressed material from the cylinder.

## Description

The present invention relates to a machine for processing moisture-containing material, particularly for recycling municipal solid waste.

Machines are known that recycle municipal solid waste by compressing it at very high pressures, so as to separate its moisture content, which includes most of the organic residues and is therefore usable as raw material for the production of fertilizers, from the dry part that can be used as fuel.

These known types of machine generally comprise a supporting frame that supports a cylinder which is open at its two ends and has a perforated skirt. One of the two ends of the perforated cylinder is periodically closed, usually by means of a disk pushed by a hydraulic cylinder, while the material to be processed is introduced through the other end and is then compressed at very high pressures by means of a piston pushed by a high-power hydraulic cylinder, thus separating the moisture content of the material flowing through the holes in the skirt of the cylinder. Then the end of the cylinder that is closed by the disk is opened and the compressed material is expelled from the cylinder to allow a new processing cycle.

The use of these types of machine has revealed some important technical problems.

The operating sequence of these machines in fact does not fully exploit the productive potential of the high-power hydraulic cylinder used to compress the material introduced in the perforated cylinder, since while the material is being introduced into the cylinder and while the dry residual is being discharged after compression, the hydraulic cylinder must unavoidably be kept inactive.

Furthermore, during compression, the seal toward the end of the cylinder through which the piston pushed by the high-power hydraulic cylinder is inserted is generally provided by the piston itself, which fits the inner walls of the perforated cylinder with an extremely small clearance. Due to this fact, during compression there is a gradual reduction in the surface, i.e. in the number of holes, through which the moisture content can be expelled from the perforated cylinder, and therefore it is necessary to increase the compression force particularly in this step in order to achieve a fully satisfactory result.

Another problem is the wear that can be observed both in the holes for the discharge of the moisture content, which are formed in the skirt of the perforated cylinder, and on the piston inserted in said perforated cylinder. Municipal solid waste in fact usually contains many small but very hard particles, such as for example pieces of glass which, due to the very high pressures attained during compression, are ejected at high speed through the holes of the perforated cylinder and in the gaps between the piston and the inner walls of the perforated cylinder, causing their rapid erosion. On the other hand, it is difficult to use very hard materials to line the inner walls of the perforated cylinder, since these walls must be ground to ensure an adequate seal together with the piston.

Yet another problem is constituted by the deformations to which the perforated cylinder is subjected; since said cylinder is rigidly coupled to the supporting structure proximate to one of its ends along its perimeter, it undergoes flexing due to the thrust applied by the closing disk on the other end.

Furthermore, due to the forces that discharge onto the perforated cylinder, it is difficult to obtain a good seal also between the closing disk and the associated end of the perforated cylinder.

The aim of the present invention is to solve the problems described above by providing a machine for processing moisture-containing material, particularly for recycling municipal solid waste, which is considerably more productive than known machines.

Within the scope of this aim, an object of the invention is to provide a machine in which wear of the components is significantly lower than in conventional machines.

Another object of the invention is to provide a machine that does not have the sealing problems that condition the operation of known machines.

Another object of the invention is to provide a machine that is highly effective in separating the moisture content from the dry part of the processed material.

With this and other objects in view, there is provided, according to the present invention, a machine for processing moisture-containing material, particularly for recycling municipal solid waste, characterized in that it comprises a fixed frame that rotatably supports, about a rotation axis, a movable frame supporting at least two cylinders in which the ends are open and the skirt is crossed by multiple holes, said cylinders being mutually angularly spaced around said rotation axis and being arrangeable in sequence, by means of the rotation of said movable frame about said rotation axis, at working stations arranged around said rotation axis and mutually angularly spaced, said working stations comprising: at least one loading station, provided with means for closing one of the ends of the cylinder located at said loading station and means for loading the material to be processed inside one of said cylinders through the other end; a compression station which has means for hermetically closing at least one of the ends of the cylinder which is located at the compression station and has a presser element insertable into said cylinder from the other end to compress the material inserted therein, extruding the moisture content of said material through the holes of the cylinder; and a discharge station provided with means for extracting the compressed material from said cylinder.

Further characteristics and advantages of the present invention will become apparent from the following description of a preferred but not exclusive embodiment thereof, illustrated only by way of non-limitative example in the accompanying drawings, wherein:

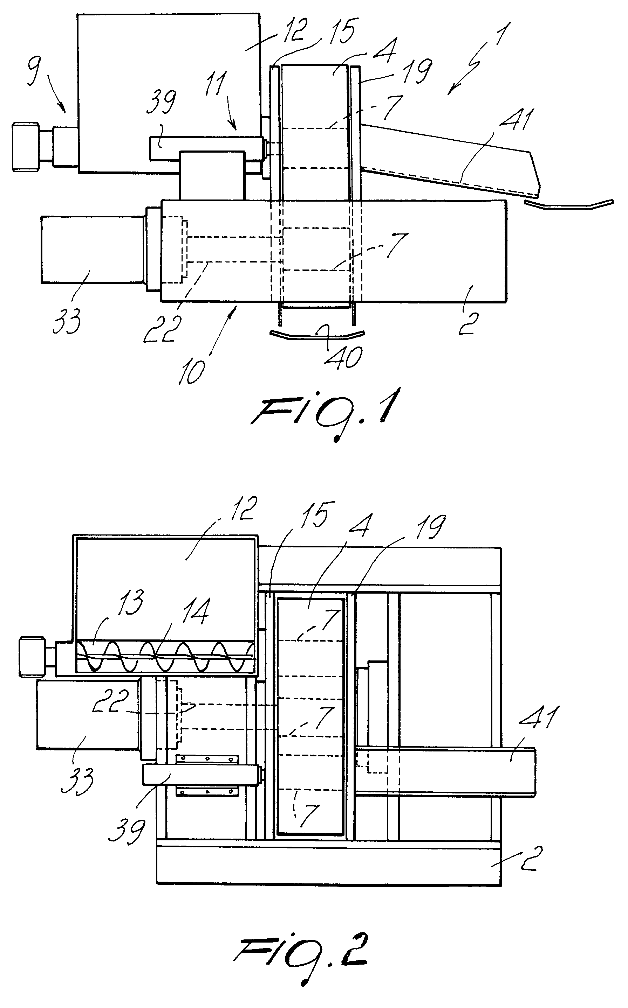

figure 1 is a schematic lateral elevation view of the machine according to the invention;
figure 2 is a schematic top plan view of the machine according to the invention;

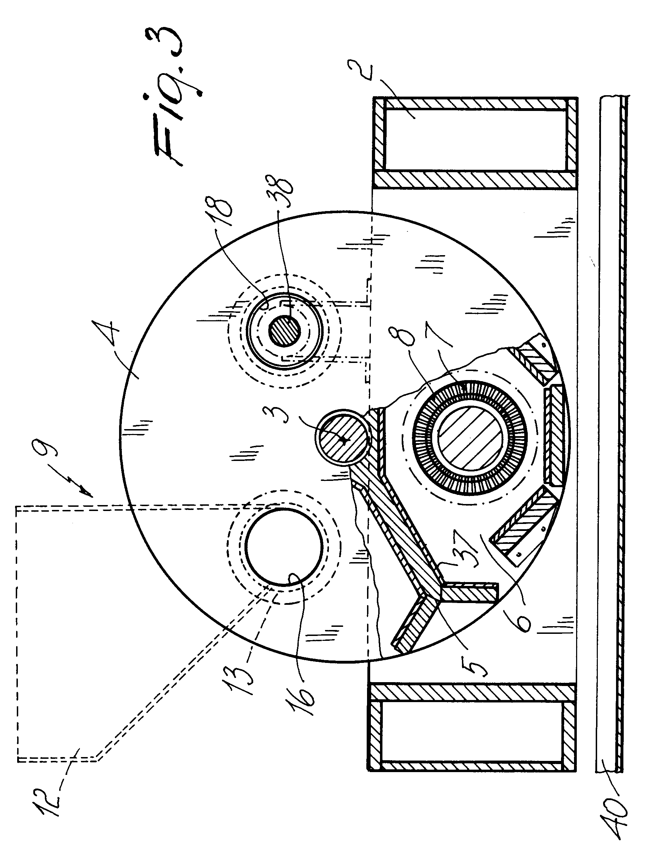

figure 3 is an enlarged-scale front elevation view of the movable frame of the machine;
figure 4 is a schematic sectional view of the machine, taken at the loading station;
figure 5 is a schematic sectional view of the machine, taken at the compression station; and

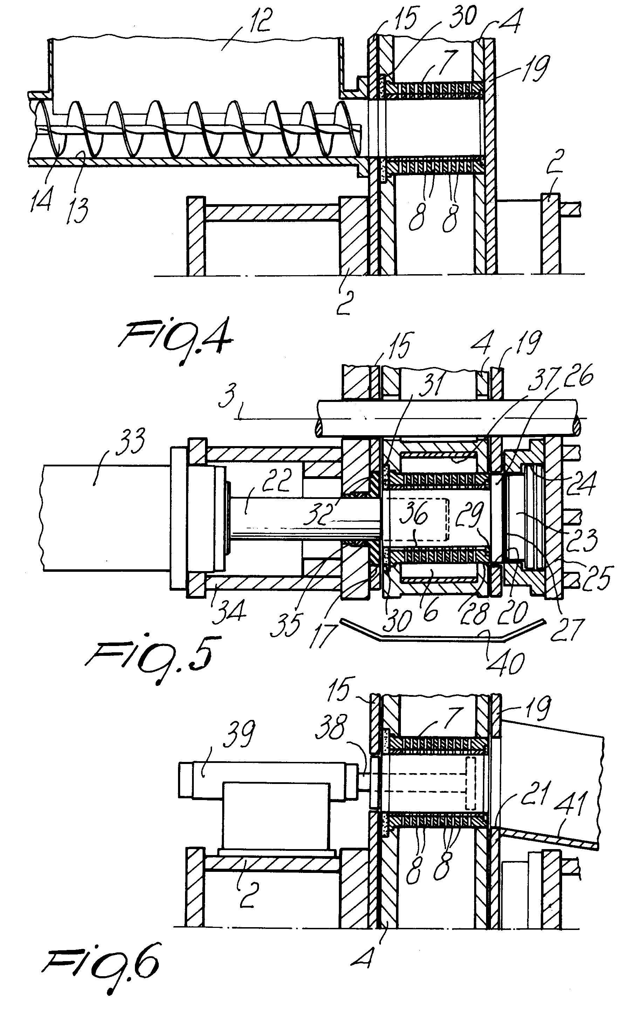

figure 6 is a schematic sectional view of the machine, taken at the discharge station.

With reference to the above figures, the machine according to the invention, generally designated by the reference numeral 1, comprises a fixed frame 2, constituted for example by a sturdy portal-shaped structure, which rotatably supports, about a rotation axis 3, a movable structure 4 constituted by a drum the axis of which coincides with the rotation axis 3, which is conveniently arranged horizontally.

The drum 4 is substantially constituted by two end walls having a circular plan, mutually spaced and rigidly fixed to each other by means of cross-members 5 that divide the inside of the drum into chambers 6 which are open at the lateral surface of the drum.

The drum 4 supports at least two cylinders 7 having open ends and a skirt crossed by multiple radial holes 8. Preferably, the drum 4 supports three cylinders 7 arranged so that their axes are parallel to the axis 3 and mutually equidistant around the axis 3, i.e. so as to form an angle of 120^{o}. Three working stations face the drum 4: a loading station 9, a compression station 10, and a discharge station 11. The working stations 9, 10 and 11 are angularly spaced around the rotation axis 3 so as to match the angular spacing of the cylinders 7, and the drum 4 is actuatable with an intermittent rotary motion about the rotation axis 3 so as to periodically place one cylinder 7 at the loading station 9, another cylinder 7 at the compression station 10, and the other cylinder 7 at the discharge station 11.

More particularly, the loading station 9 comprises a hopper 12 supported by the fixed frame 2 and having, at its bottom, a cylindrical duct 13 which is open at the top and located at the loading station 9 at its end that faces the cylinder 7; the loading means are located inside said duct and are constituted by a screw feeder 14 which can be rotated about an axis 15 which substantially coincides with the axis of the cylinder 7 located at the loading station 9.

A wall 15, rigidly coupled to the fixed frame 2, faces the side of the drum 4 directed toward the hopper 12, and three openings, respectively designated by the reference numerals 16, 17 and 18, are formed in said wall 15 and are aligned with the cylinders 7 when said cylinders are arranged at the stations 9, 10 and 11.

A wall 19 faces the opposite end of the drum 4, is rigidly coupled to the fixed frame 2 and closes the end of the cylinder 7 located at the loading station 9 on the opposite side with respect to the hopper 12. Said wall 19 has an opening 20 at the compression station 10 and an opening 21 at the discharge station 11.

In the compression station 10 there are means for hermetically closing at least one of the ends of the cylinder 7 which is located at said station and there is a presser element 22 insertable into the cylinder 7 through the other end to compress the material inserted therein, extruding the moisture content of said material through the holes 8 of the cylinder 7. More particularly, the means for hermetically closing the cylinder 7 at the compression station 10, are constituted by an auxiliary piston 23 arranged coaxially to the cylinder 7 in the compression station and slideably accommodated axially inside a chamber 24 which can be supplied, in a per se known manner, on opposite sides with respect to the piston 23, with a pressurized liquid so as to move the auxiliary piston 23 axially toward or away from the cylinder 7. The chamber 24 is formed inside a box-like structure 25 connected to the fixed frame 2.

Advantageously, a disk 26 is interposed between the auxiliary piston 23 and the end of the cylinder 7 which is directed towards said auxiliary piston 23; said disk 26 is slideably accommodated, parallel to the axis of the cylinder 7, inside the opening 20 formed in the wall 19 at the compression station 10. A layer 27 of elastically deformable material is furthermore interposed between the disk 26 and the auxiliary piston 23.

Conveniently, each cylinder 7 is loosely accommodated within a seat 28 formed in the drum 4 so that each cylinder 7 can move with respect to the drum parallel to its own axis and can oscillate about said axis. A first annular gasket 29, suitable to make contact with the disk 26, is mounted on the end of the cylinder 7 that is directed toward the disk 26 when the cylinder 7 is located at the compression station 10, whereas a second annular gasket 30 is mounted on the opposite axial end of the cylinder 7 and is accommodated inside a seat 31 appropriately formed in the end of the drum 4 concentrically to the cylinder 7. Furthermore, in the wall 15 the opening 17, which as mentioned is formed at the compression station 10, accommodates a third annular gasket 32 which faces the second annular gasket 31 and is hermetically crossed by the piston 22.

The piston 22 is actuated, in a per se known manner, by means of a hydraulic cylinder 33 supported by a framework 34 which is fixed to the fixed frame 2. Additional annular gaskets 35 are furthermore formed on the portion of the framework 34 that supports the piston 22 and are arranged in series to the third annular gasket 32; the piston 22 passes hermetically through said additional gaskets.

Advantageously, the diameter of the piston 22 is significantly smaller than the inner diameter of the cylinders 7, as will become apparent hereinafter.

The internal surface of each cylinder 7 is appropriately lined with a layer 36 of a very hard material appropriately perforated at the holes 8. Furthermore, the walls 5 are also lined, on their side directed towards the respective cylinder 7, located inside one of the chambers into which the inside of the drum 4 is divided, with a layer 37 of a very hard material.

The discharge station 11 has means for extracting the compressed material from the cylinder 7 located at said station 11; said means comprise a piston 38, also actuated by a hydraulic cylinder 39, of a known type, which is supported by the fixed frame 2 and faces, with the piston 38, the side of the drum 4 directed towards the hopper 12 and towards the piston 22. The piston 38 is arranged coaxially to the cylinder 7 when said cylinder is arranged at the discharge station 11, and is insertable, by virtue of the hydraulic cylinder 39, inside the cylinder 7 so as to expel the compressed material through the opening 21, the diameter of which is conveniently greater than the inner diameter of the cylinder 7. On the other side of the drum 4, proximate to the lower end of the opening 21, there is a chute 41 for the removal of the material expelled from the cylinder 7 by means of the piston 38.

The operation of the machine according to the invention is as follows.

The material to be processed is inserted into the hopper 12 and, by virtue of the screw feeder 14, is pushed inside the cylinder 7 located at the loading station 9. Once the material has been fully loaded inside the cylinder 7, the drum 4 is rotated about its axis through an angle of 120^{o} so as to move the cylinder 7, loaded with the material, at the compression station 10. It should be noted that during the transfer of the cylinder 7 from the loading station to the compression station the material introduced in the cylinder 7 cannot escape from the ends of the cylinder 7 because said ends are closed by the walls 15 and 19. In the compression station 10, one of the ends of the cylinder 7 is closed by the disk 26, whereas the other end faces the piston 22.

At this point the auxiliary piston 23 is actuated, pushing the disk 26 against the cylinder 7; by taking advantage of the loose coupling between the drum 4 and the cylinder 7, the auxiliary piston moves the cylinder 7 axially towards the wall 15. In this manner, the disk 26 hermetically couples to the first annular gasket 29, whereas the annular gasket 31 is pushed against the annular gasket 32, thus hermetically closing the two ends of the cylinder 7.

By moving the cylinder 7 inside the drum 4, a fully satisfactory seal is provided even if material penetrates between the annular gasket 29 and the disk 26, as well as between the annular gaskets 31 and 32.

At this point the piston 22 is actuated and, by compressing the material inside the cylinder 7 at high pressure, extrudes its moisture content through the holes 8. The moisture content then passes into the chamber 6 and, by gravity, descends into a collection tray 40 located below the drum 4.

It should be noted that since the hermetic closure of the cylinder 7 on the side directed toward the piston 22 is obtained by coupling the gaskets 31 and 32, taking advantage of the possibility of said cylinder 7 to move inside the drum 4, and since furthermore the diameter of the piston 22 is smaller than the internal diameter of the cylinder 7, wear of the piston decreases considerably and it is possible to use very hard materials to line the internal surface of the cylinder 7, since said lining does not require grinding operations as it does not have to couple to the piston 22.

Once compression has ended, the piston 22 is extracted from the cylinder 7 and the auxiliary piston 23 is deactivated; the drum 4 is again rotated through an angle of 120^{o} about the axis 3 so as to move the cylinder 7, with the compressed material, at the discharge station 11, where the piston 38, by entering the cylinder 7, expels from the opposite end the dry residual of the processed material, which is removed by the chute 41.

It should be noted that while one cylinder 7 is at the compression station 10, another cylinder 7 is in the loading station 9 and can therefore be filled with other material to be processed, whereas the other cylinder 7 is in the discharge station 11, where the dry residual of the material compressed in the previous compression station 10 is removed.

In practice it has been observed that the machine according to the invention fully achieves the intended aim since, by allowing to compress the material in a perforated cylinder while the loading of the material to be processed and the discharge of the dry residual produced by the compression of the material occur in other stations, it eliminates the downtimes required to load the material to be processed and to discharge the processed material, thus achieving a considerably higher productivity than known machines.

An additional advantage arising from the possibility of using for compression a piston which has a considerably smaller diameter than the internal diameter of the perforated cylinder is that the wear of these components is considerably reduced with respect to conventional-type machines.

Yet another advantage arising from the possibility of using all the holes formed in the skirt of the perforated cylinder to discharge the moisture content during compression is that high effectiveness is obtained in the separation of the moisture content from the dry content of the processed material.

The machine thus conceived is susceptible to numerous modifications and variations, all of which are within the scope of the inventive concept; all the details may furthermore be replaced with other technically equivalent elements.

In practice, the materials employed, so long as they are compatible with the specific use, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Machine for processing moisture-containing material, particularly for recycling municipal solid waste, characterized in that it comprises a fixed frame (2) that rotatably supports, about a rotation axis (3), a movable frame (4) supporting at least two cylinders (7) in which the ends are open and the skirt is crossed by multiple holes (8), said cylinders (7) being mutually angularly spaced around said rotation axis (3) and being arrangeable in sequence, by means of the rotation of said movable frame (4) about said rotation axis (3), at working stations (9, 10, 11) arranged around said rotation axis (3) and mutually angularly spaced, said working stations comprising: at least one loading station (9), provided with means (19) for closing one of the ends of the cylinder (7) located at said loading station (9) and means for loading (12, 14) the material to be processed inside one of said cylinders (7) through the other end; a compression station (10), which has means (23) for hermetically closing at least one of the ends of the cylinder (7) which is located at the compression station (10) and has a presser element (22) insertable into said cylinder (7) from the other end to compress the material inserted therein, extruding the moisture content of said material through the holes (8) of the cylinder; and a discharge station (11) provided with means (38, 39) for extracting the compressed material from said cylinder (7).

2. Machine according to claim 1, characterized in that said cylinders (7) are arranged so that their axes are parallel to said rotation axis (3).

3. Machine according to the preceding claims, characterized in that it comprises three cylinders (7) with a perforated skirt that are evenly mutually spaced around said rotation axis (3), said working stations (9, 10, 11) being mutually spaced around said rotation axis (3) in a matching manner for the simultaneous placement of each one of said cylinders (7) at one of said working stations (9, 10, 11).

4. Machine according to one or more of the preceding claims, characterized in that said movable frame (4) is constituted by a drum and in that said rotation axis (3) substantially coincides with the axis of said drum and is arranged horizontally.

5. Machine according to one or more of the preceding claims, characterized in that said means for closing one of the ends of the cylinder located at said loading station (9) are constituted by a wall (19) rigidly coupled to said fixed frame (2) and facing one of the ends of said drum (4), said wall (19) having openings (20, 21) that substantially match the front dimensions of each one of said cylinders (7) at least at said compression station (10) and at least at said discharge station (11).

6. Machine according to one or more of the preceding claims, characterized in that said loading means comprise a hopper (12) supported by said fixed frame (2) and having, on its bottom, a horizontal cylindrical channel which is open at the top, faces coaxially, with one of its open ends, the open end of one of said cylinders (7) arranged at said loading station (9), and coaxially accommodates a screw feeder (14) which can be rotated about its own axis to transfer the material to be processed from said hopper (12) to the cylinder (7) arranged at said loading station (9).

7. Machine according to one or more of the preceding claims, characterized in that said presser element (22) is constituted by a hydraulic piston which faces one side of said drum (4) and is arranged so that its axis is substantially parallel to said rotation axis (3) and substantially coincides with the axis of said cylinder (7) located in said compression station (10).

8. Machine according to one or more of the preceding claims, characterized in that said means for hermetically closing one of the ends of the cylinder (7) located at said compression station (10) comprise a hydraulically-actuated auxiliary piston (23) arranged opposite to said presser element (22) with respect to said drum (4).

9. Machine according to one or more of the preceding claims, characterized in that said means for extracting the compressed material from the cylinder (7) located at said discharge station (11) comprise a pneumatically- or hydraulically-actuated piston (23) which faces one of the ends of said drum (4) and is arranged so that its axis is parallel to said rotation axis (3) and substantially coincides with the axis of the cylinder located at said discharge station (11).

10. Machine according to one or more of the preceding claims, characterized in that said cylinders (7) are loosely accommodated in seats (28) formed in said drum (4) so that they can move axially and oscillate about their respective axis with respect to said drum (4).

11. Machine according to one or more of the preceding claims, characterized in that a floating disk (26) is interposed between the axial end of said cylinder (7), at said compression station (10), and said auxiliary piston (23), said disk (26) being supported by said drum (4) and closing the end of said cylinder (7) directed towards said auxiliary piston (23), a layer (27) of elastically deformable material being furthermore interposed between said disk (26) and the end of said auxiliary piston (23).

12. Machine according to one or more of the preceding claims, characterized in that the diameter of said piston which constitutes said presser element (22) is smaller than the internal diameter of said cylinders (7).

13. Machine according to one or more of the preceding claims, characterized in that chambers are formed in said drum (4) around said cylinders (7) and are connected to the outside in order to discharge the moisture content extruded from said material.

14. Machine for processing moisture-containing material, particularly for recycling municipal solid waste, comprising: a frame (4) that supports at least one cylinder (7) having open ends and a perforated skirt; means (23) for hermetically closing one of the ends of said cylinder (7); means (12, 14) for loading a moisture-containing material; a presser element (22) insertable through the open end of said cylinder (7) and means (11) for discharging the compressed material from said cylinder; characterized in that said cylinder (7) is loosely supported in a seat (28) formed in said frame (4) and in that said means (23) for hermetically closing said end of the cylinder (7) comprise an auxiliary piston (23) acting on said cylinder (7) on the opposite side with respect to said presser element (22) and hermetically engaging a gasket (32) applied to said end of the cylinder (7), said auxiliary piston (23) hermetically engaging said cylinder (7) with its opposite end against a wall (15) hermetically crossed by said presser element (22), which is constituted by a piston having a smaller diameter than the inner diameter of said cylinder (7).

15. Machine according to one or more of the preceding claims, characterized in that a floating disk (26) is interposed between the axial end of said cylinder (7) and said auxiliary piston (23), said disk (26) being supported by said frame (4) and closing the end of said cylinder (7) directed towards said auxiliary piston (23), a layer (27) of elastically deformable material being furthermore interposed between said disk (26) and the end of said auxiliary piston (23).

16. Machine according to one or more of the preceding claims, characterized in that a first annular gasket (29) is applied to the end of said cylinder (7) directed toward said auxiliary piston (23), said disk (26) making contact with said gasket (29) due to the pushing action applied by said auxiliary piston (23).

17. Machine according to one or more of the preceding claims, characterized in that a second annular sealing gasket (30) is arranged on the end of said cylinder (7) directed toward said presser element (22) and can be touched, by virtue of the pushing action applied to said cylinder (7) by said auxiliary piston (23), by a wall (15) that faces said cylinder and is slidingly crossed by said presser element (22), said disk (26) having sealing means that can engage said annular gasket (29) and said presser element (22).

18. Machine according to one or more of the preceding claims, characterized in that said sealing means comprise at least one third annular gasket (32) applied to said wall (15), facing said second annular gasket (31) applied to said cylinder, and hermetically crossed by said piston (22) which constitutes said presser element.
